# FASCICULE DE BREVET EUROPEEN

(11) **EP 2 948 957 B1**
(45) Date de publication et mention de la délivrance du brevet: **08.03.2017**
(21) Numéro de dépôt: 14703283.3
(22) Date de dépôt: 21.01.2014
(51) Int. Cl.: G21C 1/09, G21C 1/32, G21C 13/067, G21C 1/08

(54) **RÉACTEUR NUCLÉAIRE À EAU PRESSURISÉE DE TYPE INTÉGRÉ COMPORTANT UN PRESSURISEUR INTÉGRÉ**
INTEGRIERTER DRUCKWASSERKERNREAKTOR MIT INTEGRIERTEM DRUCKERZEUGER
INTEGRATED-TYPE PRESSURIZED WATER NUCLEAR REACTOR COMPRISING AN INTEGRATED PRESSURIZER

(30) Priorité: 25.01.2013 FR 1350672
(43) Date de publication de la demande: 02.12.2015
(73) Titulaire: Société Technique pour l'Energie Atomique Technicatome, 91190 Villiers Le Bacle (FR)
(72) Inventeur: CANDILLIER, Laurent, F-13109 Simiane-Collongue (FR); CHARCOSSET, Jean-Yves, F-13770 Venelles (FR); PARRAUD, Phillipe, F-83670 Barjols (FR)
(74) Mandataire: Cabinet Camus Lebkiri
(86) Numéro de dépôt international: PCT/EP2014/051086
(87) Numéro de publication internationale: WO 2014/114618

(56) Documents cités:
- EP-A1- 0 157 321
- DE-U1-202012 011 622
- US-A- 4 087 323
- US-A- 5 102 616
- US-A1- 2005 018 806

## Description

La présente invention concerne le domaine des réacteurs nucléaires à eau sous pression et se rapporte plus particulièrement à la mise sous pression du liquide primaire.

Les réacteurs nucléaires à eau sous pression comportent un circuit primaire dans lequel l'eau de refroidissement, appelée eau primaire, du réacteur est maintenue à une forte pression, de l'ordre de 155 bars, au moyen d'un pressuriseur.

Le pressuriseur permet de maintenir la pression dans le circuit primaire entre certaines limites déterminées, soit pas aspersion lorsque la pression à tendance à dépasser la limite supérieure admise, soit pas chauffage électrique de l'eau primaire lorsque la pression a tendance à descendre en dessous de la valeur inférieure admise.

Dans les réacteurs à eau pressurisée de type intégré, ou encore de type compact, le pressuriseur est intégré directement dans la cuve réacteur, et plus précisément en partie supérieure de la cuve réacteur, de manière à rendre les installations plus compactes et à réduire les risques de rupture du confinement du circuit primaire.

Lors des opérations de chargement/déchargement du combustible nucléaire et pour avoir accès au bloc chaudière, il est procédé à la dépose du couvercle de la cuve réacteur ainsi qu'à la dépose de toutes les traversées qui y sont rattachées et qui traversent de ce fait le pressuriseur.

L'intégration d'un pressuriseur dans la partie supérieure de la cuve réacteur nécessite de faciliter la démontabilité du couvercle, ce qui s'obtient en réduisant le nombre des opérations à réaliser de manière à réduire le temps d'indisponibilité du réacteur, l'exposition du personnel intervenant et par conséquent le coût économique des opérations de maintenance.

Enfin, après rechargement, chacune des liaisons reconstituées doit faire l'objet d'opérations nombreuses et minutieuses comme le contrôle de l'état des joints, des portées de joint, le contrôle ou le remplacement de la boulonnerie, le serrage de la boulonnerie au couple prédéfini, la confection des soudures des lèvres d'étanchéité le cas échéant. Une fois assemblées, les liaisons doivent faire l'objet de contrôle précis afin de vérifier le bon raccordement, ce qui peut se traduire par : un ressuage des soudures d'étanchéité, un test hydraulique.
Les documents US 2005/018806 A1, US 5 102 616 A et EP 0 157 321 A1 divulguent des réacteurs à eau pressurisée selon l'art antérieure.

Dans ce contexte, la présente invention propose de fournir un réacteur nucléaire à eau pressurisée de type intégré ou compact, comportant un pressuriseur intégré dans la partie supérieure de la cuve permettant de réduire le nombre de liaisons extérieures à la cuve et traversant le pressuriseur de manière à simplifier les opérations de montage/démontage lors du rechargement en combustible.

A cette fin, l'invention propose, un réacteur nucléaire à eau pressurisée comportant :
- une enceinte formée par une cuve intégrant le coeur du réacteur nucléaire et par un couvercle ;
- un pressuriseur intégré dans ladite enceinte comportant des lignes hydrauliques reliées à des circuits extérieurs, ledit couvercle de l'enceinte formant la paroi supérieure dudit pressuriseur ;
ledit réacteur nucléaire étant caractérisé en ce que au moins une ligne hydraulique est formée par :
- une première ligne agencée au-travers de ladite cuve de l'enceinte primaire et sous le plan de pose du couvercle sur ladite cuve ;
- une deuxième ligne solidaire dudit couvercle ;
ladite première ligne et ladite deuxième ligne étant adaptées pour s'emboiter l'une dans l'autre de façon étanche et amovible lorsque ledit couvercle est positionné sur ladite cuve, le contact entre les extrémités des deux lignes étant assuré par des moyens élastiques.

Grâce à l'invention, les deux parties d'une même ligne n'ont pas besoin d'être démontables pour assurer le démontage du couvercle. La continuité de la ligne se fait à l'intérieur de l'enceinte sous pression et l'étanchéité relative de chaque ligne hydraulique est réalisée lors de la pose du couvercle du réacteur par la mise en contact des deux lignes, constituant la liaison hydraulique, qui sont agencées en vis-à-vis.

On notera toutefois que l'étanchéité absolue n'est pas requise et que les différences de pression exercées sur la liaison amovible sont liées à la perte de charge des écoulements dans les lignes.

Ainsi grâce à l'invention, les opérations de pose et de dépose du couvercle sont simplifiées par la réduction du nombre des liaisons traversant le couvercle.

Avantageusement, le réacteur comporte une pluralité de lignes hydraulique selon l'invention.

Bien entendu, ce type de jonction en deux parties peut être multiplié autant que nécessaire sur les lignes traversantes pour assurer le fonctionnement correct du pressuriseur.

Le réacteur nucléaire selon l'invention peut également présenter une ou plusieurs des caractéristiques ci-dessous, considérées individuellement ou selon toutes les combinaisons techniquement possibles :
- lesdits moyens élastiques sont agencés sur une portion verticale de ladite première ligne de la ligne hydraulique ;
- lesdits moyens élastiques sont formés par un soufflet métallique ;
- ladite extrémité de ladite première ligne présente un embout de forme sphérique ;
- ladite extrémité de ladite première ligne présente un embout de forme conique ;
- ledit pressuriseur intégré dans ladite enceinte primaire comporte une ligne de réfrigération, une ligne de condensation, une ligne de décharge, une ligne d'appoint d'eau, ladite ligne de réfrigération et/ou ladite ligne de condensation et/ou ladite ligne de décharge et/ou ladite ligne d'apport d'eau est réalisée par :
   - une première ligne agencée au-travers de ladite cuve de l'enceinte primaire et sous le plan de pose du couvercle sur ladite cuve ;
   - une deuxième ligne solidaire dudit couvercle ;
ladite première ligne et ladite deuxième ligne étant adaptées pour s'emboiter l'une dans l'autre de façon étanche et amovible lorsque ledit couvercle est positionné sur ladite cuve, le contact entre les extrémités des deux lignes étant assuré par des moyens élastiques ;

Avantageusement, ladite première ligne .agencée au-travers de ladite cuve de l'enceinte primaire et sous le plan de pose du couvercle sur ladite cuve est une ligne présentant un axe longitudinal horizontal ou oblique ou vertical.

D'autres caractéristiques et avantages de l'invention ressortiront clairement de la description qui en est donnée ci-dessous, à titre indicatif et nullement limitatif :
- la figure 1 représente schématiquement une vue de la partie supérieure d'un réacteur nucléaire selon l'invention intégrant un pressuriseur dans la partie supérieure de l'enceinte primaire ;
- la figure 2 représente schématiquement l'arrangement d'une ligne hydraulique du pressuriseur ;
- la figure 3 représente la liaison démontable de la ligne hydraulique illustrée à la figure 2.

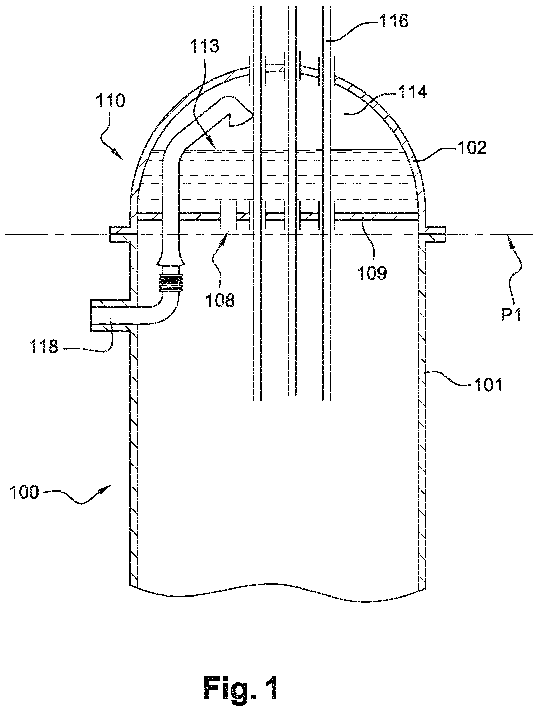

La figure 1 représente donc schématiquement un réacteur nucléaire 100 de type intégré ou compact présentant :
- une enceinte primaire 100 formée par une cuve 101 intégrant le coeur du réacteur nucléaire et par un couvercle 102 recouvrant le coeur du réacteur et fermant cuve 101 ;
- un pressuriseur 110 intégré dans la partie supérieure de l'enceinte primaire 100, le couvercle 102 de l'enceinte primaire formant le dôme supérieur du pressuriseur 110 ;
- des lignes internes démontables assurant la communication entre la cuve 101 et le pressuriseur 110 ;
- des lignes hydrauliques 118 de liaison entre des circuits externes à la cuve 101 et le pressuriseur 110.

Le pressuriseur 110 est délimité en partie inférieure par une paroi inférieure 109 formant ainsi une séparation physique entre le pressuriseur 110 et le coeur du réacteur (non représenté) située dans la partie inférieure de la cuve 101.

L'espace intérieur du pressuriseur 110 (formé par la partie de l'enceinte primaire 100 se situant au-dessus de la plaque inférieure 109 est en communication avec le liquide primaire par l'intermédiaire d'orifices 108. Ainsi, le pressuriseur 110 est en permanence partiellement remplit par l'eau primaire. Le niveau d'eau primaire 113 à l'intérieur du pressuriseur 110 est fonction de la pression courante de l'eau primaire du réacteur. Le ciel 114 du pressuriseur 110 est rempli par de la vapeur d'eau, à une pression sensiblement égale à la pression de l'eau primaire présente dans le pressuriseur 110.

La paroi inférieure 109 présente également des ouvertures autorisant le passage des tiges de commandes 116 des grappes de contrôle et de l'instrumentation nécessaire au fonctionnement du réacteur nucléaire.

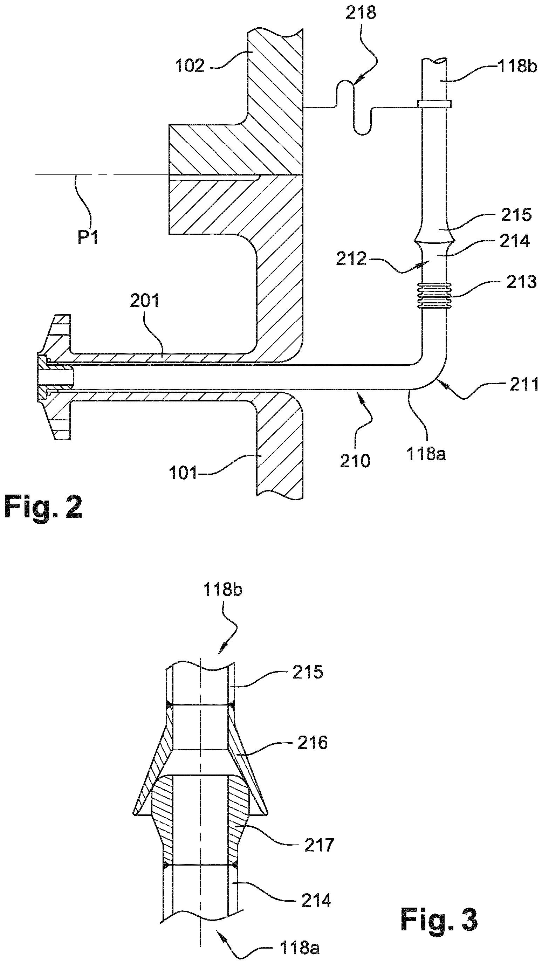

La figure 2 illustre de façon plus détaillée un exemple de réalisation d'une ligne hydraulique 118 particulière, comme par exemple une ligne de condensation d'eau primaire apte à être reliée à un circuit externe à la cuve 101.

La ligne hydraulique 118 est formée par deux parties distinctes :
- une première partie inférieure 118a agencée au travers de la paroi de la cuve 101 et positionnée sous le plan de pose P1 du couvercle 102 ;
- une deuxième partie supérieure 118b solidaire du couvercle 102

La figure 3 illustre précisément la jonction entre les deux parties 118a et 118b de la ligne hydraulique 118.

La première partie inférieure 118a de la ligne hydraulique 118 traverse la cuve 101 au niveau d'un bossage 201 prévu à cet effet au niveau de la paroi de la cuve 101. L'extrémité de la ligne hydraulique 118 située à l'extérieure de l'enceinte primaire 100 est reliée à une tubulure d'alimentation en eau primaire via des moyens prévus à cet effet.

La première partie inférieure 118a est formée par une section sensiblement horizontale 210, une section coudée 211 et une section verticale 212. Sur la section verticale 212, des moyens élastiques 213 sont aménagés de manière à autoriser un certain déplacement de l'extrémité 214 de la section verticale 212. Dans le mode de réalisation illustré à la figure 2, les moyens élastiques 213 sont formés par un soufflet apte à se détendre ou à se contracter.

La deuxième partie supérieure 118b de la ligne hydraulique 118 comporte au moins une section verticale dont l'extrémité inférieure est adaptée pour assurer une liaison étanche et amovible avec la partie inférieure 118a. La deuxième partie supérieure 118b est solidarisée au couvercle 102 via un support 218.

L'extrémité 215 de la partie supérieure 118b est terminée par un embout de forme sensiblement conique 216, telle qu'illustré de façon précise à la figure 3, solidarisé à l'extrémité 215 par exemple par soudure. L'embout conique 216 est apte à coopérer avec un embout de forme sphérique 217 solidarisé sur l'extrémité 214 de la partie inférieure 118a, par exemple par soudure.

Les deux embouts 216 et 217 forment ainsi une liaison étanche réalisée par un contact sphère/cône. Le contact étanche est assuré par les moyens élastiques 213 qui autorisent une certaine élasticité de l'extrémité 214 à l'accouplement des deux embouts 216 et 217.

Ainsi lors des opérations de chargement/déchargement du combustible nucléaire, le démontage du couvercle 102 engendre la déconnection de la ligne hydraulique 118, la partie supérieure 118b de la ligne étant avantageusement solidaire du couvercle 102. Lors du montage du couvercle 102, la partie supérieure 118b de la ligne hydraulique 118 vient s'emboiter avec la partie inférieure 118a via les embouts sphère/cône.

Le pré-positionnement du couvercle 102 lors de sa descente est assuré via des moyens prévus à cet effet.

Bien entendu, l'invention n'est pas limitée au mode de réalisation qui vient d'être décrit.

Pour résumer la solution proposée est basée sur le principe de la simplification des opérations de pose et de dépose du couvercle par la réduction du nombre de liaisons à démonter puis à contrôler ainsi que de la limitation voire de la suppression des liaisons fluides traversant le couvercle de l'enceinte primaire.

Par conséquent, la solution proposée s'applique aussi bien aux lignes hydrauliques de liaison entre les circuits externes à la cuve et le pressuriseur qu'aux lignes internes démontables assurant la communication en fluide entre la cuve et le pressuriseur.

Le principe de la liaison étanche par contact sphère/cône et d'amovibilité des liaisons fluides du pressuriseur est applicable à toutes les lignes fluides du pressuriseur, telles que la ligne de réfrigération, la ligne de condensation, une ligne de décharge, une ligne d'appoint d'eau.

## Revendications

1. Réacteur nucléaire à eau pressurisée comportant :
- une enceinte (100) formée par une cuve (101) intégrant le coeur du réacteur nucléaire et par un couvercle (102) ;
- un pressuriseur (110) intégré dans ladite enceinte (100) comportant des lignes hydrauliques (118) reliées à des circuits extérieurs, ledit couvercle (102) de l'enceinte (100) formant la paroi supérieure dudit pressuriseur (110) ;
dans ledit réacteur nucléaire au moins une ligne hydraulique (118) dudit pressuriseur (110) est formée par :
- une première ligne (118a) agencée au-travers de ladite cuve (101) de l'enceinte primaire (100) et sous le plan de pose (P1) du couvercle (102) sur ladite cuve (101) ;
- une deuxième ligne (118b) solidaire dudit couvercle (102) ;
- ladite première ligne (118a) et ladite deuxième ligne (118b) étant adaptées pour s'emboiter l'une dans l'autre de façon étanche et amovible lorsque ledit couvercle (102) est positionné sur ladite cuve (101), le contact entre les extrémités (214, 215) des deux lignes (118a, 118b) étant assuré par des moyens élastiques (213).

2. Réacteur nucléaire à eau pressurisée selon la revendication précédente **caractérisé en ce que** lesdits moyens élastiques sont agencés sur une portion verticale (212) de ladite première ligne (118a) de la ligne hydraulique (118).

3. Réacteur nucléaire à eau pressurisée selon l'une des revendications précédentes **caractérisé en ce que** lesdits moyens élastiques sont formés par un soufflet métallique.

4. Réacteur nucléaire à eau pressurisée selon l'une des revendications précédentes **caractérisé en ce que** ladite extrémité (214) de ladite première ligne (118a) présente un embout (217) de forme sphérique.

5. Réacteur nucléaire à eau pressurisée selon l'une des revendications précédentes **caractérisé en ce que** ladite extrémité (215) de ladite première ligne (118b) présente un embout (216) de forme conique.

6. Réacteur nucléaire à eau pressurisée selon l'une des revendications précédentes **caractérisé en ce que** ledit pressuriseur intégré (110) dans ladite enceinte (100) comporte une ligne de réfrigération, une ligne de condensation, une ligne de décharge, une ligne d'apport d'eau, ladite ligne de réfrigération et/ou ladite ligne de condensation et/ou ladite ligne de décharge et/ou ladite ligne d'appoint d'eau est formée par :
- une première ligne agencée au-travers de ladite cuve (101) de l'enceinte (100) et sous le plan de pose (P1) du couvercle (102) sur ladite cuve (101) ;
- une deuxième ligne solidaire dudit couvercle (102) ;
- ladite première ligne et ladite deuxième ligne étant adaptées pour s'emboiter l'une dans l'autre de façon étanche et amovible lorsque ledit couvercle (102) est positionné sur ladite cuve (101), le contact entre les extrémités des deux lignes étant assuré par des moyens élastiques.

## Patentansprüche

1. Druckwasser-Nuklearreaktor, umfassend:
- eine Einfassung (100), die durch ein Becken (101) gebildet wird, das den Kern des Nuklearreaktors einschließt, und durch einen Deckel (102);
- einen Druckgeber (110), der in die genannte Einfassung (100) integriert ist, umfassend hydraulische Leitungen (118), die an externe Kreisläufe angeschlossen sind, wobei der genannte Deckel (102) der Einfassung (100) die obere Wand des genannten Druckgebers (110) bildet;
wobei der genannte Nuklearreaktor in wenigstens einer hydraulischen Leitung (118) des genannten Druckgebers (110) gebildet ist durch:
- eine erste Leitung (118a), die durch das genannte Becken (101) der primären Einfassung (100) und unter der Ablageebene (P1) des Deckels (102) auf dem genannten Becken (101) angeordnet ist;
- eine zweite Leitung (118b), die mit dem genannten Deckel (102) fest verbunden ist;
- wobei die genannte erste Leitung (118a) und die genannte zweite Leitung (118b) geeignet sind, um abgedichtet und abnehmbar ineinander einzugreifen, wenn der genannte Deckel (102) auf dem genannten Becken (101) positioniert ist, wobei der Kontakt zwischen den Enden (214, 215) der zwei Leitungen (118a, 118b) durch elastische Mittel (213) gewährleistet ist.

2. Druckwasser-Nuklearreaktor gemäß dem voranstehenden Anspruch, **dadurch gekennzeichnet, dass** die genannten elastischen Mittel auf einem vertikalen Abschnitt (212) der genannten ersten Leitung (118a) der hydraulischen Leitung (118) angeordnet sind.

3. Druckwasser-Nuklearreaktor gemäß einem der voranstehenden Ansprüche, **dadurch gekennzeichnet, dass** die genannten elastischen Mittel durch eine Metalldichtung gebildet sind.

4. Druckwasser-Nuklearreaktor gemäß einem der voranstehenden Ansprüche, **dadurch gekennzeichnet, dass** das genannte Ende (214) der genannten ersten Leitung (118a) ein Ansatzstück (217) in sphärischer Form aufweist.

5. Druckwasser-Nuklearreaktor gemäß einem der voranstehenden Ansprüche, **dadurch gekennzeichnet, dass** das genannte Ende (215) der genannten ersten Leitung (118b) ein Ansatzstück (216) in konischer Form aufweist.

6. Druckwasser-Nuklearreaktor gemäß irgendeinem der voranstehenden Ansprüche, **dadurch gekennzeichnet, dass** der genannte integrierte Druckgeber (110) in der genannten Einfassung (100) eine Kühlleitung, eine Kondensatleitung, eine Ablaufleitung, eine Wasserzufuhrleitung umfasst, wobei die genannte Kühlleitung und / oder die genannte Kondensatleitung und / oder die genannte Ablaufleitung und / oder die genannte Wasserzufuhrleitung gebildet ist durch:
- eine erste Leitung, die angeordnet ist durch das genannte Becken (101) der Einfassung (100) und unter der Ablageebene (P1) des Deckels (102) auf dem genannten Becken (101);
- eine zweite Leitung, die fest mit dem genannten Deckel (102) befestigt ist;
- wobei die genannte erste Leitung und die genannte zweite Leitung geeignet sind, um abgedichtet und abnehmbar ineinander einzugreifen, wenn der genannte Deckel (102) auf dem genannten Becken (101) positioniert ist, wobei der Kontakt zwischen den Enden der zwei Leitungen durch elastische Mittel gewährleistet ist.

## Claims

1. A pressurised water nuclear reactor including:
- a containment (100) formed by a vessel (101) integrating the core of the nuclear reactor and by a vessel head (102);
- a pressurizer (110) integrated in said containment (100) including hydraulic lines (118) connected to external circuits, said vessel head (102) of the containment (100) forming the upper wall of said pressurizer (110);
in said nuclear reactor, at least one hydraulic line (118) of said pressurizer (110) is formed by:
- a first line (118a) arranged through said vessel (101) of the primary containment (100) and under the mounting plane (P1) of the vessel head (102) on said vessel (101);
- a second line (118b) integral with said vessel head (102);
- said first line (118a) and said second line (118b) being adapted to sealingly removably fit into each other when said vessel head (102) is positioned on said vessel (101), the contact between the ends (214, 215) of both lines (118a, 118b) being ensured by elastic means (213).

2. The pressurised water nuclear reactor according to the preceding claim, **characterised in that** said elastic means are arranged on a vertical portion (212) of said first line (118a) of the hydraulic line (118).

3. The pressurised water nuclear reactor according to one of the preceding claims, **characterised in that** said elastic means are formed by a metal bellows.

4. The pressurised water nuclear reactor according to one of the preceding claims, **characterised in that** said end (214) of said first line (118a) has a spherically shaped tip (217).

5. The pressurised water nuclear reactor according to one of the preceding claims, **characterised in that** said end (215) of said first line (118a) has a conically shaped tip (216).

6. The pressurised water nuclear reactor according to one of the preceding claims, **characterised in that** said pressurizer (110) integrated in said containment (100) includes a refrigeration line, a condensation line, a discharge line, a water supply line, said refrigeration line and/or said condensation line and/or said discharge line and/or said water supply line being formed by:
- a first line arranged through said vessel (101) of the containment (100) and under the mounting plane (P1) of the vessel head (102) on said vessel (101);
- a second line integral with said vessel head (102);
- said first line and said second line being adapted to sealingly removably fit into each other when said vessel head (102) is positioned on said vessel (101), the contact between the ends of both lines being ensured by elastic means.
